# EUROPÄISCHE PATENTANMELDUNG

(11) **EP 3 534 593 A1**
(43) Veröffentlichungstag der Anmeldung: **04.09.2019**
(21) Anmeldenummer: 18159460.7
(22) Anmeldetag: 01.03.2018
(51) Int. Cl.: H04L 29/08, H04L 29/06, H04W 4/02

(54) **VERFAHREN ZUR VERGABE EINES BEDIENRECHTES UND VORRICHTUNG**

(71) Anmelder: Siemens Aktiengesellschaft, 80333 München (DE)
(72) Erfinder: Jöhnßen, Oliver, 91058 Erlangen (DE); Kubo, Florian, 97727 Fuchsstadt (DE)

(57) **Zusammenfassung**

Die Erfindung bezieht sich auf ein Verfahren zur Vergabe eines Bedienrechtes (BR) für eine über eine Steuerungsvorrichtung (PLC) automatisierte Maschine (Ma), wobei das Bedienrecht (BR) von einer stationären Bedienvorrichtung (S) an eine mobile Bedienvorrichtung (M) übergeben wird, wobei für eine Prüfung, ob sich die mobile Bedienvorrichtung (M) in einem zulässigen Bedienbereich (BB) der Maschine (Ma) befindet, folgende Schritte ausgeführt werden:
- mittels der mobilen Bedienvorrichtung (M) wird die Übergabe des Bedienrechtes (BR) von der stationären Bedienvorrichtung (S) auf die mobile Bedienvorrichtung (M) angefragt, und dadurch wird
- die stationäre Bedienvorrichtung (S) veranlasst ein Merkmal (FP) zur eindeutigen Identifizierung bereitzustellen,
- das Merkmal (FP) wird von der mobilen Bedienvorrichtung (M) registriert und an die stationäre Bedienvorrichtung (S) zurückgemeldet, damit wird eine Information zum Ort der mobilen Bedienvorrichtung (M) im Bezug auf die stationäre Bedienvorrichtung (S) erzeugt,
für die Übergabe des Bedienrechtes werden folgende Schritte ausgeführt:
- die mobile Bedienvorrichtung (M) beantragt das Bedienrecht und sendet das Merkmal (FP) an eine Verwaltungseinheit (VE),
- die Verwaltungseinheit (VE) prüft anhand des Merkmals (FP) und einer Beziehungsvorschrift (BV), ob das Merkmal (FP) von der stationären Bedienvorrichtung (S) stammt und ob das Merkmal (FP) sendende mobile Bedienvorrichtung (M) grundsätzlich zur Bedienung der Maschine (Ma) freigegeben ist, und wenn die Prüfung erfolgreich war wird das Bedienrecht (BR) auf die mobile Bedienvorrichtung (M) übertragen.

## Beschreibung

Die Erfindung betrifft ein Verfahren zur Vergabe eines Bedienrechtes für eine über eine Steuerungsvorrichtung automatisierte Maschine, wobei das Bedienrecht von einer stationären Bedienvorrichtung an eine mobile Bedienvorrichtung übergeben wird.

Des Weiteren betrifft die Erfindung ein System zur Vergabe eines Bedienrechtes für eine über eine Steuerungsvorrichtung automatisierte Maschine, wobei das Bedienrecht von einer stationären Bedienvorrichtung an eine mobile Bedienvorrichtung übergeben wird, und das System die stationäre Bedienvorrichtung, die mobile Bedienvorrichtung, eine Verwaltungseinheit und ein Netzwerk umfasst.

Eine Benutzerschnittstelle zu einem industriellen Prozess um eine Maschine bedienen und beobachten zu können, wird auch HMI (Human Machine Interface) genannt. Das HMI erlaubt einem Anlagenbetreiber nicht nur das Beobachten von Anlagenzuständen sondern auch das Bedienen und das Eingreifen in den Prozess. Eine Bereitstellung der Informationen erfolgt entweder über Bedienpulte mit Signallampen, Anzeigefeldern und Tasten oder per Software über ein Visualisierungssystem. Weit verbreitet sind derzeit Touchpanel-Systeme mit der entsprechenden Visualisierungssoftware. Diese Touchpanel-Systeme dienen als eine Bedienvorrichtung. Diese Bedienvorrichtung kann sowohl als eine stationäre Bedienvorrichtung oder auch als eine mobile Bedienvorrichtung ausgeführt sein. In der Regel sind die mobile und die stationäre Bedienvorrichtung über ein Netzwerk mit einer Verwaltungseinheit verbunden. Die Verwaltungseinheit kann z.B. als ein Personal Computer ausgeführt sein und wird auch HMI-Server genannt, dementsprechend wird die mobile Bedienvorrichtung mobiler HMI-Client und die stationäre Bedienvorrichtung stationärer HMI-Client genannt. Bisher ist es nicht möglich, in einer Industrieanlage eine Bedienberechtigung einer ortsgebundenen stationären Bedienvorrichtung auf ein anderes mobiles HMI-System (mobile Bedienvorrichtung) sicher zu übergeben. Lösungen, wie VNC oder WEB konnten nur aufgrund ihrer Personen-Berechtigung, aber nicht bezüglich ihrer Ortsberechtigungen sicher (zertifiziert) eingesetzt werden.

Es ist daher die Aufgabe der vorliegenden Erfindung ein Verfahren und eine Vorrichtung bereitzustellen, welche für eine mobile Bedienvorrichtung eine sichere Zuordnung des Ortes bei der Bedienrechtsübernahme gewährleisten.

Die Aufgabe wird dadurch gelöst, dass bei einer Prüfung, ob sich die mobile Bedienvorrichtung in einem zulässigen Bedienbereich der Maschine befindet, folgende Schritte ausgeführt werden: mittels der mobilen Bedienvorrichtung wird die Übergabe des Bedienrechtes von der stationären Bedienvorrichtung auf die mobile Bedienvorrichtung angefragt, und dadurch wird die stationäre Bedienvorrichtung veranlasst, ein Merkmal zur eindeutigen Identifizierung bereitzustellen, das Merkmal wird von der mobilen Bedienvorrichtung registriert und an die stationäre Bedienvorrichtung zurückgemeldet, damit wird eine Information zum Ort der mobilen Bedienvorrichtung in Bezug auf die stationäre Bedienvorrichtung erzeugt, für die Übergabe des Bedienrechtes werden folgende Schritte ausgeführt: die mobile Bedienvorrichtung beantragt das Bedienrecht und sendet das Merkmal an eine Verwaltungseinheit, die Verwaltungseinheit prüft anhand des Merkmals und einer Bezugsvorschrift, ob das Merkmal von der stationären Bedienvorrichtung stammt und ob die das Merkmal sendende mobile Bedienvorrichtung grundsätzlich zur Bedienung der Maschine freigeben ist, und wenn die Prüfung erfolgreich war, wird das Bedienrecht auf die mobile Bedienvorrichtung übertragen.

Durch das Anzeigen des Merkmals der stationären Bedienvorrichtung, das Registrieren der mobilen Bedienvorrichtung und das anschließende Rückmelden des registrierten Merkmals an die stationäre Bedienvorrichtung wurde verfahrensgemäß eine Redundanz geschaffen, die zur Bedienrechtsübernahme bei mobilen Bedienvorrichtungen erforderlich ist, denn so ist sichergestellt, dass sich der Bediener an einem vordefinierten Ort befindet, da die Übernahme eines Bedienrechtes auf eine mobile Bedienvorrichtung nur im Sichtbereich eines definierten Bedienbereich erlaubt ist. Ein Vorteil ist es somit, dass eine Bedienrechtsübernahme allein durch eine Initiierung des Verbindungswunsches an der mobilen Bedienvorrichtung (beispielsweise von einem Smart Device) erfolgen kann, ohne das ein Anlagenbediener vorher an der stationären Bedienvorrichtung (HMI-Gerät) eine Aktion starten muss. Damit kann das Bedienrecht im "Sichtbereich" zur stationären Bedienvorrichtung übernommen werden und nicht nur, wie es vorher möglich war, in "Handreichweite" zur stationären Bedienvorrichtung. Dadurch wird für das Bedienpersonal eine Komfortsteigerung erreicht. Eine Anlageneffizienz erhöht sich und durch die technischen Maßnahmen im genannten Verfahren ist eine fehlersichere Bedienrechtsübernahme gewährleistet.

Beispielsweise wäre es jetzt ausreichend wenn ein Anlagenbediener mit seinem Smartphone aus einigen Metern Entfernung mit der Kamera des Smartphones einen auf dem Panel der stationären Bedienvorrichtung angezeigten QR-Code scannt.

Bei einer vorteilhaften Ausgestaltung wird verfahrensgemäß zusätzlich durch die mobile Bedienvorrichtung eine Authentifizierungsinformation mit gesendet. Die mobile Bedienvorrichtung nutzt die Daten von der stationären Bedienvorrichtung um beispielsweise das Bedienrecht über eine Funkverbindung (WLAN) von der Verwaltungseinheit (HMI-Server) zu beantragen. Dazu kann sich die mobile Bedienvorrichtung zum einen in vorteilhafter Weise mittels einer Authentifizierungs-ID selber ausweisen und zum anderen liefert sie, durch das aufgenommene Merkmal, die Information zum Ortsbezug.

Weiterhin ist es vorteilhaft, wenn durch die stationäre Bedienvorrichtung Konfigurationsinformationen der Maschine an die mobile Bedienvorrichtung gesendet werden. Auch ist es vorteilhaft, wenn durch die stationäre Bedienvorrichtung Darstellungsinformationen und ein Funktionsumfang einer grafischen Benutzerschnittstelle der stationären Bedienvorrichtung an die mobile Bedienvorrichtung gesendet werden. Darstellungsinformationen und Funktionsumfang der grafischen Benutzerschnittstelle können mit einem Responsive Web Design übertragen werden. Dabei handelt es sich um ein gestalterisches und technisches Paradigma zur Erstellung von Websites, so dass diese auf Eigenschaften des jeweils benutzten Endgerätes, vor allem Smartphones und Tablet Computer, reagieren können.

Die eingangs genannte Aufgabe wird ebenfalls durch ein System zur Vergabe eines Bedienrechtes für eine über eine Steuerungsvorrichtung automatisierte Maschine gelöst. Dabei wird das Bedienrecht von einer stationären Bedienvorrichtung an eine mobile Bedienvorrichtung übergeben. Das System umfasst die stationäre Bedienvorrichtung, die mobile Bedienvorrichtung, eine Verwaltungseinheit und ein Netzwerk, wobei die stationäre Bedienvorrichtung dazu ausgestaltet ist auf Anfrage der mobilen Bedienvorrichtung ein Merkmal zur eindeutigen Identifikation bereitzustellen, um mit dem Merkmal in einer Wechselwirkung mit der mobilen Bedienvorrichtung festzustellen, ob sich die mobile Bedienvorrichtung in einem zulässigen Bedienbereich der Maschine befindet, dabei ist die mobile Bedienvorrichtung dazu ausgestaltet, das Merkmal zu registrieren, weiterhin ist die mobile Bedienvorrichtung dazu ausgestaltet, die Übergabe des Bedienrechtes zu beantragen und das Merkmal an die Verwaltungseinheit zu senden, die Verwaltungseinheit ist dazu ausgestaltet, anhand des Merkmals und einer Beziehungsvorschrift zu prüfen, ob das Merkmal von der stationären Bedienvorrichtung stammt und, ob die das Merkmal sendende mobile Bedienvorrichtung grundsätzlich zur Bedienung der Maschine freigegeben ist, und wenn die Prüfung erfolgreich war, wird das Bedienrecht auf die mobile Bedienvorrichtung übertragen.

Vorteilhafter Weise ist die stationäre Bedienvorrichtung ein HMI Client, welcher ortsfest in der Anlage verbaut ist und drahtgebunden mit dem Netzwerk verbunden ist. Das Netzwerk ist als ein drahtgebundenes und als ein drahtloses Netzwerk, beispielsweise als ein Ethernet oder Profinet mit WLAN-Anbindung. Optional kann der stationäre HMI-Client ein Display mit Touch, eine Kamera mit Blitz, ein Mikrofon, ein Lautsprecher und kabellose Schnittstellen (z.B. Bluetooth, MFC, IR, RFID, WLAN, LTE/GPRS) besitzen. Die mobile Bedienvorrichtung ist als ein mobiler HMI-Client (z.B. Smartphone, Tablet, Smartwatch) ausgestaltet. Sie ist mobil und kabellos mit dem Netzwerk verbunden. Sie besitzt beispielsweise ein Display mit Touchoberfläche, eine Kamera mit Blitz, ein Mikrofon, einen Lautsprecher und einen Vibrationsalarm.

Eine Bedienrechtsübergabe könnte wie folgt ablaufen:

### 1. Informationen zum Bedienrecht abfragen (mobiler HMI-Client)

Ein Bediener nimmt den mobilen HMI-Client zur Hand und öffnet eine Applikation (App oder Browser, HTML5) und beantragt die Übernahme des Bedienrechtes. Solch ein Antrag kann auf viele unterschiedliche Arten erfolgen. Dies Arten hängen im Wesentlichen von den technischen Merkmalen der mobilen Geräte ab. Beispielsweise könnte ein mobiles Endgerät (Smartphone) ein Blitzlicht in einem bestimmten Muster auslösen und dieses Blitzlicht wird von einer Kamera des stationären HMI-Client registriert. Oder es wird eine bestimmte Melodie durch den mobilen HMI-Client abgespielt und von den Mikrofonen des stationären HMI-Client erfasst. Ein Vibrationsalarm des mobilen HMI-Clients wird rhythmisch aktiviert und durch die Mikrofone des stationären HMI-Client erfasst. Der mobile HMI-Client wird in Reichweite des NFC Senders des stationären HMI-Client gebracht. Die kapazitiven Touchscreens des mobilen HMI-Client und des stationären HMI-Client werden in Kontakt gebracht.

### 2. Ortsbezug herstellen (Stationärer HMI Client)

Der stationäre HMI Client reagiert auf den Antrag. Es werden Informationen zur Identifikation des stationären HMI Client und des aktuellen Screens ausgetauscht. Außerdem wird der Standort des mobilen HMI-Client überprüft. Dabei sind die auszutauschenden Informationen sowohl von der Konfiguration der Maschine als auch dem eingesetzten Verfahren abhängig. Dabei können unterschiedliche Kanäle zum Einsatz kommen um die Sicherheit zusätzlich zu erhöhen.

Folgende Informationen sind relevant:
- Die ID des aktuell ausgewählten Screens
- Den Ortsbezug (z.B. über stationären HMI Client und Maschine)
- Die ID der Session/Transaktion, welche der mobile Client an den HMI Server schicken muss.

Auch der Austausch dieser Informationen und die Herstellung des Ortsbezugs können auf viele unterschiedliche Arten erfolgen. Diese hängen im Wesentlichen von den technischen Merkmalen der Geräte ab. Im Folgenden werden Exemplarisch einige der Alternativen aufgeführt:
Beispiele für die Herstellung des Ortsbezugs:
   - Auf dem Display des stationären HMI Client wird ein Code eingeblendet. Der Anwender muss den Code laut vorlesen, sodass dieser von dem stationärem HMI Client wieder erfasst werden kann. Eine 3D-Kamera stellt sicher, dass es sich um einen echten Anwender und nicht um ein Bild und einen Lautsprecher handelt.
   - Der mobile HMI Client sendet ein Blitz-(Morse)Code der von der Kamera des stationären HMI Client erfasst wird.
   - Der stationäre HMI Client sendet ein Blitz-(Morse)Code der von der Kamera des mobilen HMI Client erfasst wird.
   - Der stationäre HMI Client sendet die Daten via NFC an den mobilen HMI Client in Reichweite.
   - Auf dem stationären HMI Client wird ein "single image stereogram (SIS)" oder single image random dots stereogram (SIRDS)" angezeigt. Dessen Code muss der Anwender im mobilen HMI Client eingeben.
   - Die Vibrationen des mobilen HMI Client werden z. B. vom Mikrofon vom stationären HMI Client erfasst.
   - Der mobile HMI Client spielt einen akustischen Code ab, den der stationäre HMI Client mit seinen Mikrophonen erfasst.
   - Der stationäre HMI Client spielt einen akustischen Code ab, den der mobile HMI Client mit seinen Mikrophonen erfasst.
   - Der mobile HMI Client zeigt auf dem Display einen maschinenlesbaren (statischen oder dynamischen) Code an, den die Kamera des stationären HMI Client erfasst (z.B. QR-Code).
   - Der stationäre HMI Client zeigt auf dem Display einen (statischen oder dynamischen) maschinenlesbaren Code an, den die Kamera des mobilen HMI Client erfasst (z.B. QR-Code).
   - Der stationäre HMI Client fordert einen (statischen oder dynamischen) maschinenlesbaren Code vom mobilen HMI Client ein. Dieser wird auf dem Display des mobilen HMI Client angezeigt und durch die Kamera im stationären HMI Client erfasst. Zusätzlich kann der stationäre HMI Client über Lautsprecher den Anwender auffordern das Display des Mobilen HMI-Clients zu drehen (z.B. 90° im Uhrzeigersinn).
   - Der mobile HMI Client sendet über Funk (gerichtet oder ungerichtet) Informationen die der stationäre HMI Client erfasst (z.B. Bluetooth, WLAN, NFC, RFID).
   - Der stationäre HMI Client sendet über Funk (gerichtet oder ungerichtet) Informationen die der mobile HMI Client erfasst (z.B. Bluetooth, WLAN, NFC, RFID).

### Hinweis:

Das Bild einer 3D Kamera lässt sich viel schwieriger als das Bild einer 2D Kamera datentechnisch manipulieren. Es reicht dort nicht Fotos und Videos vor die Linse zu halten.

### 3. Bedienhoheit beantragen (Mobiler HMI Client)

Der mobile HMI Client nutzt die Daten vom stationärem HMI Client um das Bedienrecht via WLAN vom HMI Server zu beantragen. Dazu weist er sich zum einen selbst aus (Authentifizierung) und zum anderen liefert er Informationen zum Ortsbezug.

### 4. Antrag prüfen und Bedienhoheit zuweisen (HMI Server)

Der HMI Server prüft den Antrag zur Übernahme des Bedienrechts. War die Prüfung erfolgreich, entzieht der HMI Server dem stationärem HMI Client das Bedienrecht und weist es dem mobilen HMI Client zu.

### 5. Mobile Bedienung (Mobiler HMI Client)

Der Bediener hat nun die Bedienhoheit über die Maschine auf seinem mobilen HMI Client und kann die Maschine abhängig von den entsprechenden Einstellungen bedienen. Der Funktionsumfang ist dabei (via Responsive Design) an den jeweiligen mobilen HMI Client angepasst.

### 6. Bedienhoheit abgeben (Mobiler HMI Client)

Der Bediener gibt die Bedienhoheit am mobilen HMI Client wieder ab. Das kann entweder explizit, indem er eine entsprechende Schaltfläche betätigt oder implizit, indem er den Bereich verlässt oder ein Timeout erreicht wird, erfolgen.

Optional bleibt der mobile HMI Client nach Abgabe des Bedienrechts im "Beobachtungsmodus". Die Daten werden also weiterhin aktualisiert aber er hat keine Möglichkeit zur Bedienung.

In der Zeichnung wird ein mögliches Ausführungsbeispiel aufgezeigt. Es zeigen
- FIG 1: eine Übersicht des Systems zur Vergabe eines Bedienrechtes in einem Blockschaltbild und
- FIG 2: den Verfahrensablauf des Anforderns eines Bedienrechtes mit einer mobilen Bedienvorrichtung.

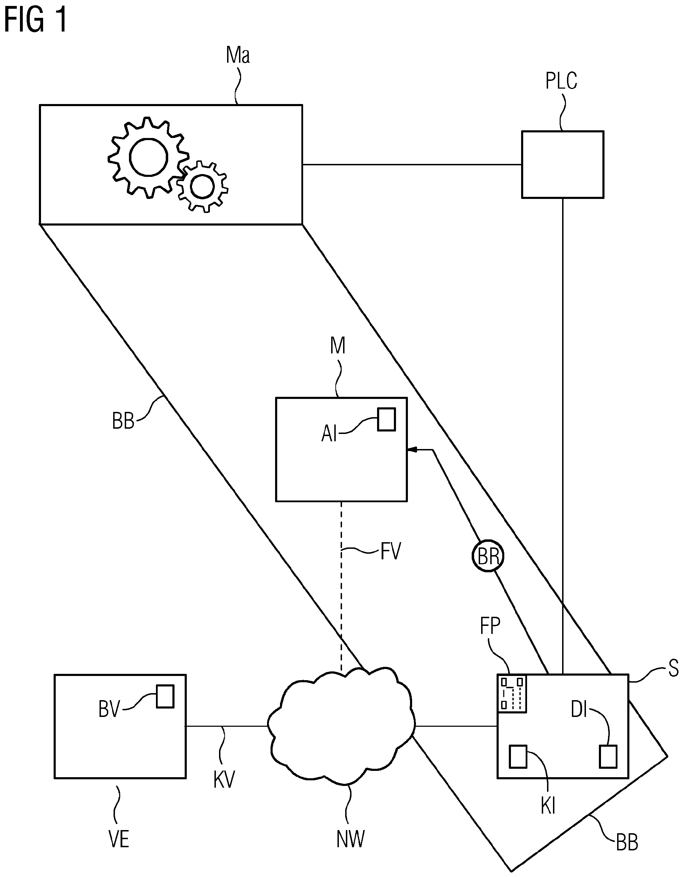

Die FIG 1 zeigt ein System zur Vergabe eines Bedienrechtes BR für eine über eine Steuerungsvorrichtung PLC automatisierte Maschine Ma. Das Bedienrecht BR wird von einer stationären Bedienvorrichtung S an eine mobile Bedienvorrichtung M übergeben. Die stationäre Bedienvorrichtung S ist beispielsweise als ein stationärer HMI-Client (Touchpanel PC) ausgestaltet. Die mobile Bedienvorrichtung M ist beispielsweise als ein mobiler HMI-Client (Tablet PC) mit einer Funkverbindung FV zum Netzwerk NW ausgestaltet. Das Netzwerk NW verbindet die stationäre Bedienvorrichtung S, die mobile Bedienvorrichtung M mit einer Verwaltungseinheit VE, welche als ein HMI-Server ausgestaltet ist. Die Verwaltungseinheit VE und die stationäre Bedienvorrichtung S sind jeweils über eine Kabelverbindung KV an das Netzwerk NW angeschlossen. Ausgehend von einer örtlichen Lage der stationären Bedienvorrichtung S wird ein Bedienbereich BB in Sichtweite zu der Maschine Ma aufgespannt. Für ein sicheres Bedienen der Maschine Ma muss immer gewährleistet sein, dass sich ein Bediener innerhalb des Bedienbereiches BB, mit Sichtkontakt zur Maschine Ma, befindet.

Die stationäre Bedienvorrichtung S ist dazu ausgestaltet, auf Anfrage der mobilen Bedienvorrichtung M ein Merkmal FP (beispielsweise ein QR-Code) zur eindeutigen Identifikation bereitzustellen, um mit dem Merkmal FP in einer Wechselwirkung mit der mobilen Bedienvorrichtung M festzustellen, ob sich die mobile Bedienvorrichtung M in dem zulässigen Bedienbereich BB der Maschine Ma befindet, dabei ist die mobile Bedienvorrichtung M dazu ausgestaltet, das Merkmal FP zu registrieren. Diese Registrierung kann beispielsweise mit der in ein Tablet PC eingebauten Kamera durchgeführt werden. Weiterhin ist die mobile Bedienvorrichtung M dazu ausgestaltet, die Übergabe des Bedienrechtes BR zu beantragen und das Merkmal FP an die Verwaltungseinheit VE zu senden und anhand des Merkmals FP und einer Beziehungsvorschrift BV zu prüfen, ob das Merkmal FP von der stationären Bedienvorrichtung S stammt, und ob die das Merkmal FP sendende mobile Bedienvorrichtung M grundsätzlich zur Bedienung der Maschine freigegeben ist und wenn die Prüfung erfolgreich war, wird das Bedienrecht BR auf die mobile Bedienvorrichtung M übertragen. Die Beziehungsvorschrift BV könnte z.B. eine Tabelle sein in der drin steht der derartig gescannte QR-Codes in einen Nummernband X bis Y nur von den besagten stationären HMI-Client kommen können.

Bei der Anfrage der mobilen Bedienvorrichtung M an die stationäre Bedienvorrichtung S kann die stationäre Bedienvorrichtung S Konfigurationsinformationen KI der Maschine Ma und Darstellungsinformationen DI der grafischen Benutzeroberfläche zusätzlich an die mobile Bedienvorrichtung M übertragen. Auch kann die mobile Bedienvorrichtung M zusätzlich sowohl an die stationäre Bedienvorrichtung S als auch an die Verwaltungseinheit Authentifizierungsinformationen AI übertragen.

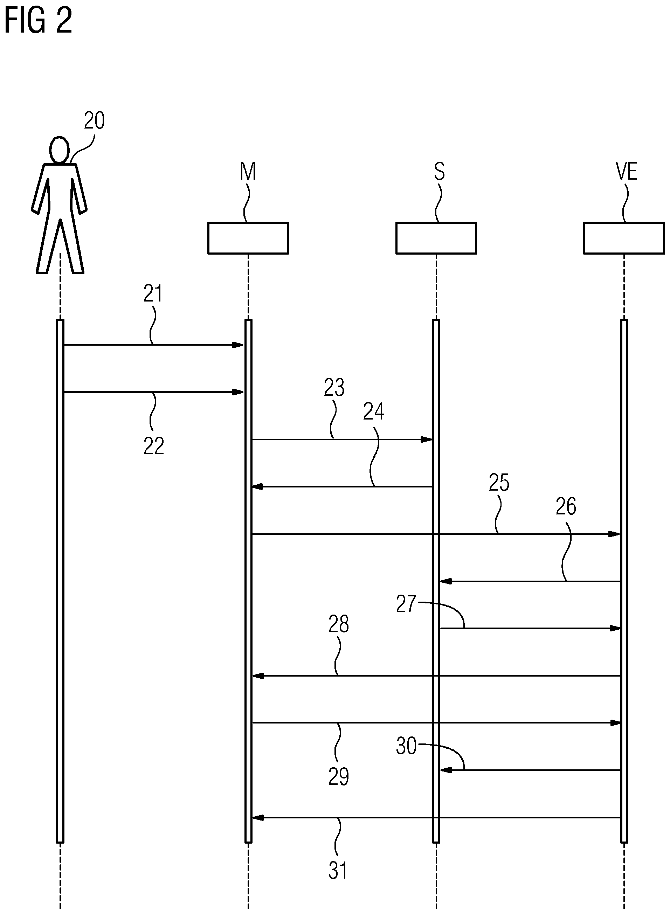

Mit der FIG 2 ist der Ablauf der Verfahrensschritte für das anfordern des Bedienrechtes BR dargestellt. Im Wesentlichen gliedert sich das Verfahren in vier Hauptpunkte:
1. Informationen zum Bedienrecht anfragen.
2. Ortsbezug herstellen.
3. Bedienrecht beantragen.
4. Antrag prüfen und Bedienrecht zuweisen.

Beispielsweise steht ein Benutzer 20 im Bedienbereich BB der Maschine Ma (siehe FIG 1) und startet auf seiner mobilen Bedienvorrichtung M eine Applikation Bedienübergabe starten 21. In der Applikation kann der Benutzer 20 das Bedienrecht anfordern 22. Ausgehend von der mobilen Bedienvorrichtung M werden mittels der Applikation Informationen zum Bedienrecht BR erfragt 23, worauf die stationäre Bedienvorrichtung S mit dem Verfahrensschritt Ortsbezug herstellen 24 reagiert.

Die mobile Bedienvorrichtung M wird bei der Verwaltungseinheit VE das Bedienrecht BR beantragen 25. Die Verwaltungseinheit VE reagiert mit Ortsbezug prüfen 26. Die stationäre Bedienvorrichtung S wird das Prüfergebnis bereitstellen 27. Zusätzlich kann die Verwaltungseinheit VE eine Identifizierung anfordern 28, wodurch die mobile Bedienvorrichtung M aufgefordert wird, Informationen bereitzustellen 29 und nach erfolgreicher Prüfung wird die Verwaltungseinheit VE der stationären Bedienvorrichtung S das Bedienrecht BR entziehen 30 und der mobilen Bedienvorrichtung M das Bedienrecht BR zuweisen 31.

Im Folgenden werden zusätzlich noch Beispiele aufgezeigt wie die Übergabe realisiert werden könnte.

### Beispiel 1: Smartphone mit Blitz und Gegenblitz

### 1. Informationen zum Bedienrecht abfragen (Mobiler HMI Client)

Der Bediener nimmt den mobilen HMI Client zur Hand und öffnen die Applikation (APP oder Browser, HTML5). Der Bediener richtet das Smartphone auf den stationären HMI Client und beantragt die Übernahme der Bedienhoheit. Das Smartphone löst einen Blitz-Code (vergleichbar eines Morse-Codes) aus um die Bedienhoheit anzufordern.

### 2. Ortsbezug herstellen (Stationär HMI Client)

Der mobile HMI Client identifiziert den stationären HMI Client und den Screen über den QR-Code der immer in der Ecke eines Touch Screens angezeigt wird. Damit hat der mobile HMI Client die notwendigen Informationen und es muss nur noch sichergestellt werden, dass sich der mobile HMI Client auch wirklich vor Ort befindet. Dazu sendet der stationäre HMI Client, der das Blitzen registriert hat, einen Blitz-Code zurück an den mobilen HMI Client, welcher über dessen Kamera erkannt wird.

### 3. Bedienrecht beantragen (Mobiler HMI Client)

Nach dieser Prozedur schickt der mobile HMI Client den HMI Server den Antrag das Bedienrecht zu übernehmen.

### 4. Antrag prüfen und Bedienrecht zuweisen (HMI Server)

Der HMI Server prüft den Antrag, sperrt das Bedienrecht für den stationären HMI Client, erteilt dem mobile HMI Client das Bedienrecht und schickt HMI-Daten an den mobile HMI Client.

### 5. Mobile Bedienung (Mobiler HMI Client)

### 6. Bedienrecht abgeben (Mobiler HMI Client)

Der Bediener betätigt eine Schaltfläche am mobilen HMI Client und via Blitz wird der Abmeldewunsch an den stationären HMI Client übermittelt.

### Beispiel 2: Smartphone mit Blitz und maschinenlesbaren Code

### 1. Informationen zum Bedienrecht abfragen (Mobiler HMI Client)

Der Bediener nimmt das Smartphone zur Hand und öffnet die Applikation (APP oder Browser, HTML5). Der Bediener richtet das Smartphone auf den stationären HMI Client und beantragt die Übernahme des Bedienrechts. Das Smartphone löst einen Blitz-Code (vergleichbar eines Morse-Codes) aus um das Bedienrecht anzufordern.

### 2. Ortsbezug herstellen (Stationär HMI Client)

Der stationäre HMI Client registriert das Blitzen, erkennt über seine Kamera den Anwender mit seinem Smartphone und blendet einen (sich dynamisch ändernden) QR-Code ein. In diesen Codes sind folgende Informationen enthalten:
- Der stationäre HMI Client mit dem der Bediener interagiert
- Der zuvor angezeigte Screen
- Eine Session ID

### 3. Bedienrecht beantragen (Mobiler HMI Client)

Nach dieser Prozedur schickt das Smartphone den HMI Server den Antrag das Bedienrecht zu übernehmen.

### 4. Antrag prüfen und Bedienrecht zuweisen (HMI Server)

Der HMI Server prüft den Antrag, sperrt das Bedienrecht für den stationären HMI Client, erteilt dem Smartphone das Bedienrecht und schickt HMI-Daten an das Smartphone.

### 5. Mobile Bedienung (Mobiler HMI Client)

### 6. Bedienrecht abgeben (Mobiler HMI Client)

Der Bediener verlässt den Bedienbereich BB und das Bedienrecht wird ihm nach vorheriger Warnung automatisch entzogen.

### Beispiel 3: SmartWatch mit Vibrationsalarm und Tönen

### 1. Informationen zum Bedienrecht abfragen (Mobiler HMI Client)

Der Bediener öffnet an seiner Smartwatch die Applikation (APP oder Browser, HTML5). Der Bediener beantragt die Übernahme des Bedienrechts und hält die Smartwatch an den stationären HMI Client. Die Smartwatch löst den Vibrationsalarm (vergleichbar eines Morse-Codes) aus um das Bedienrecht anzufordern.

### 2. Ortsbezug herstellen (Stationär HMI Client)

Der stationäre HMI Client empfängt den Vibrationscode z.B. mit Lautsprecher/Vibrationssensoren/analog-resistiv

Touch/Akustik-Touch. Der Lautsprecher des stationärem HMI Client spielt einen akustischen Code ab, der wiederum von der Smartwatch empfangen wird.

### 3. Bedienhoheit beantragen (Mobiler HMI Client)

Nach dieser Prozedur schickt die Smartwatch den HMI Server den Antrag das Bedienrecht zu übernehmen.

### 4. Antrag prüfen und Bedienhoheit zuweisen (HMI Server)

Der HMI Server prüft den Antrag, sperrt das Bedienrecht für den stationären HMI Client, erteilt die Smartwatch das Bedienrecht und schickt HMI-Daten an die Smartwatch.

### 5. Mobile Bedienung (Mobiler HMI Client)

### 6. Bedienhoheit abgeben (Mobiler HMI Client)

Der Bediener betätigt eine Schaltfläche an seiner Smartwatch und via Vibrations-Code wird der Abmeldewunsch an den stationären HMI Client übermittelt

### Beispiel 4: Smartphone mit Blitz und Funk

### 1. Informationen zum Bedienrecht abfragen (Mobiler HMI Client)

Der Bediener nimmt sein Smartphone zur Hand und öffnet die Applikation (APP oder Browser, HTML5). Der Bediener richtet das Smartphone auf den stationären HMI Client und beantragt die Übernahme des Bedienrechts. Das Smartphone löst einen Blitz-Code (vergleichbar eines Morse-Codes) aus um das Bedienrecht anzufordern.

### 2. Ortsbezug herstellen (Stationär HMI Client)

Der stationäre HMI Client erkennt anhand des Blitzcodes das Smartphone des Bedieners und tauscht anschließend über Funk die notwendigen Informationen aus (z.B. GPRS, WLAN, Bluetooth).

### 3. Bedienrecht beantragen (Mobiler HMI Client)

Nach dieser Prozedur schickt das Smartphone den HMI Server den Antrag das Bedienrecht zu übernehmen.

### 4. Antrag prüfen und Bedienrecht zuweisen (HMI Server)

Der HMI Server prüft den Antrag, sperrt das Bedienrecht für den stationären HMI Client, erteilt dem Smartphone das Bedienrecht und schickt HMI-Daten an das Smartphone.

### 5. Mobile Bedienung (Mobiler HMI Client)

### 6. Bedienrecht abgeben (Mobiler HMI Client)

Der Bediener betätigt eine Schaltfläche am Smartphone und via Funk wird dem stationären HMI Client der Abgabewunsch übermittelt.

### Beispiel 5: Tablet mit Funk und maschinenlesbarem Code

### 1. Informationen zum Bedienrecht abfragen (Mobiler HMI Client)

Der Bediener nimmt das Tablet zur Hand und öffnet die Applikation (APP oder Browser, HTML5) und beantragt die Übernahme des Bedienrechts. Das Tablet sendet daraufhin via Funk-Beacons (z.B. iBeacon) seine Informationen in die unmittelbare Umgebung.

### 2. Ortsbezug herstellen (Stationär HMI Client)

Der stationäre HMI Client registriert das Tablet und sendet ihm einen Code um sich zu identifizieren. Auf dem Display des Tablets wird der Code nun als QR-Code dargestellt. Der Bediener richtet das Display auf den stationären HMI Client, den er übernehmen möchte. Die Kamera des stationären HMI Client liest den Code und stellt, um die Informationen, die zur Übernahme des Bedienrechts notwendig sind, über eine Funkverbindung zur Verfügung.

### 3. Bedienrecht beantragen (Mobiler HMI Client)

Nach dieser Prozedur schickt das Tablet dem HMI Server den Antrag das Bedienrecht zu übernehmen.

### 4. Antrag prüfen und Bedienrecht zuweisen (HMI Server)

Der HMI Server prüft den Antrag, sperrt das Bedienrecht für den stationären HMI Client, erteilt dem Tablet das Bedienrecht und schickt HMI-Daten an das Tablet.

### 5. Mobile Bedienung (Mobiler HMI Client)

### 6. Bedienrecht abgeben (Mobiler HMI Client)

Der Bediener verlässt den Bereich des stationären HMI Client dieser kann den Beacon des Tablets nicht mehr detektieren und fordert daher das Bedienrecht vom HMI Server an.

## Patentansprüche

1. Verfahren zur Vergabe eines Bedienrechtes (BR) für eine über eine Steuerungsvorrichtung (PLC) automatisierte Maschine (Ma), wobei das Bedienrecht (BR) von einer stationären Bedienvorrichtung (S) an eine mobile Bedienvorrichtung (M) übergeben wird, wobei für eine Prüfung, ob sich die mobile Bedienvorrichtung (M) in einem zulässigen Bedienbereich (BB) der Maschine (Ma) befindet,
folgende Schritte ausgeführt werden:
- mittels der mobilen Bedienvorrichtung (M) wird die Übergabe des Bedienrechtes (BR) von der stationären Bedienvorrichtung (S) auf die mobile Bedienvorrichtung (M) angefragt, und dadurch wird
- die stationäre Bedienvorrichtung (S) veranlasst ein Merkmal (FP) zur eindeutigen Identifizierung bereitzustellen,
- das Merkmal (FP) wird von der mobilen Bedienvorrichtung (M) registriert und an die stationäre Bedienvorrichtung (S) zurückgemeldet, damit wird eine Information zum Ort der mobilen Bedienvorrichtung (M) im Bezug auf die stationäre Bedienvorrichtung (S) erzeugt,
für die Übergabe des Bedienrechtes werden folgende Schritte ausgeführt:
- die mobile Bedienvorrichtung (M) beantragt das Bedienrecht und sendet das Merkmal (FP) an eine Verwaltungseinheit (VE),
- die Verwaltungseinheit (VE) prüft anhand des Merkmals (FP) und einer Beziehungsvorschrift (BV), ob das Merkmal (FP) von der stationären Bedienvorrichtung (S) stammt und ob die das Merkmal (FP) sendende mobile Bedienvorrichtung (M) grundsätzlich zur Bedienung der Maschine (Ma) freigegeben ist, und wenn die Prüfung erfolgreich war wird das Bedienrecht (BR) auf die mobile Bedienvorrichtung (M) übertragen.

2. Verfahren nach Anspruch 1, wobei durch die mobile Bedienvorrichtung (M) eine Authentifizierungsinformation (AI) mit gesendet wird.

3. Verfahren nach Anspruch 1 oder 2, wobei durch die stationäre Bedienvorrichtung (M) Konfigurationsinformationen (KI) der Maschine (Ma) an die mobile Bedienvorrichtung (M) gesendet werden.

4. Verfahren nach einem der Ansprüche 1 bis 3, wobei durch die stationäre Bedienvorrichtung (M) Darstellungsinformationen (DI) und ein Funktionsumfang einer grafischen Benutzerschnittstelle der stationären Bedienvorrichtung (M) an die mobile Bedienvorrichtung (M) gesendet werden.

5. System zur Vergabe eines Bedienrechtes (BR) für eine über eine Steuerungsvorrichtung (PLC) automatisierte Maschine (Ma), wobei das Bedienrecht (BR) von einer stationären Bedienvorrichtung (S) an eine mobile Bedienvorrichtung (M) übergeben wird, umfassend
die stationäre Bedienvorrichtung (S),
die mobile Bedienvorrichtung (M),
eine Verwaltungseinheit (VE),
ein Netzwerk (NW),
wobei die stationäre Bedienvorrichtung (S) dazu ausgestaltet ist, auf Anfrage der mobilen Bedienvorrichtung (M) ein Merkmal (FP) zur eindeutigen Identifikation bereitzustellen, um mit dem Merkmal (FP) in einer Wechselwirkung mit der mobilen Bedienvorrichtung (M) festzustellen, ob sich die mobile Bedienvorrichtung (M) in einem zulässigen Bedienbereich (BB) der Maschine (Ma) befindet, dabei ist die mobile Bedienvorrichtung (M) dazu ausgestaltet das Merkmal zu registrieren, weiterhin ist die mobile Bedienvorrichtung (M) dazu ausgestaltet, die Übergabe des Bedienrechtes (BB) zu beantragen und das Merkmal (FP) an die Verwaltungseinheit (VE) zu senden, die Verwaltungseinheit (VE) ist dazu ausgestaltet anhand des Merkmals (FP) und einer Beziehungsvorschrift (BV) zu prüfen, ob das Merkmal (FP) von der stationären Bedienvorrichtung (S) stammt und, ob die das Merkmal (FP) sendende mobile Bedienvorrichtung (M) grundsätzlich zur Bedienung der Maschine (Ma)freigegeben ist, und wenn die Prüfung erfolgreich war wird das Bedienrecht (BR) auf die mobile Bedienvorrichtung (M) übertragen.
